# EUROPEAN PATENT SPECIFICATION

(11) **EP 0 455 095 B1**
(45) Date of publication and mention of the grant of the patent: **05.10.1994**
(21) Application number: 91106478.0
(22) Date of filing: 23.04.1991
(51) Int. Cl.: B27B 5/06, B27C 9/00, B27M 1/08

(54) **Combined machine for processing panels or stacked panels of wood or any like material**
Kombinierte Maschine zur Verarbeitung von einzelnen oder gestapelten Holzplatten oder ähnlichem Material
Machine combinée pour travailler des panneaux de bois à l'unité ou en paquets ou matériau similaire

(30) Priority: 03.05.1990 IT 1245790
(43) Date of publication of application: 06.11.1991
(73) Proprietor: GIBEN IMPIANTI S.p.A., I-40065 Pianoro (Bologna) (IT)
(72) Inventor: Benuzzi, Piergiorgio, I-40100 Bologna (IT)
(74) Representative: Porsia, Bruno

(56) References cited:
- EP-A- 0 267 156
- DE-A- 2 330 476
- DE-A- 3 019 692
- DE-A- 3 024 701
- US-A- 3 473 583
- US-A- 3 483 904
- US-A- 4 694 871
- HOLZ ALS ROH- UND WERKSTOFF. vol. 45, no. 2, February 1987, BERLIN DE pages 77- 78; "Plattenaufteilen mit künstlicher Intelligenz"

## Description

The invention relates to a combined machine that is not only capable to perform any cutting operation, but also any other machining operation such as milling, drilling, smoothing or the like, on panels or packs of panels of wood or any like material, according to the pre-characterizing part of Claim 1.

A combined machine according to the pre-characterizing part of Claim 1, is known from the document US-A-4.694.871 in which a drilling device arranged at a stationary location under the worktable, is combined with the cutting apparatus.

Conversely, the invention provides a combined machine that is characterized by the features of the characterizing part of Claim 1.

The advantages arising from the invention will clearly appear in the following specification of one preferred embodiment thereof, which is shown merely by way of a non-limiting example in the Figures of the two annexed sheets of drawing, in which:
Figure 1 is a top plan view showing a combined machine of the type as provided by the invention.
Figures 2 and 3 are top plan views showing some possible applications of the combined machine according to the invention
Figures 4 and 5 are side views showing the electronically controlled main saddle of the combined machine, at the time that some possible panel-machining operations, other than the panel-cutting work, are being carried out.

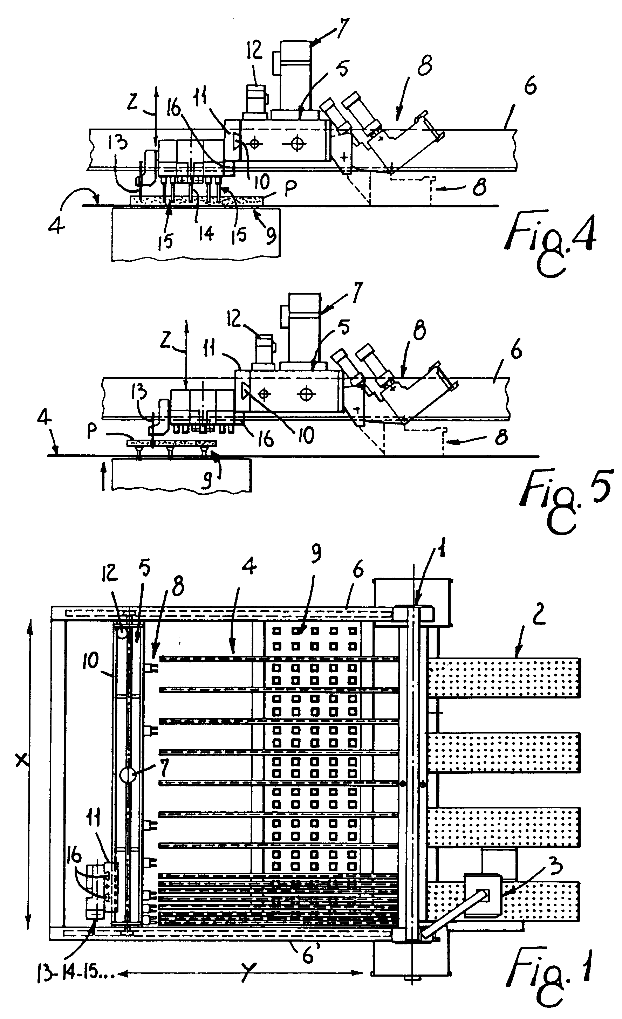

In Figure 1 there is shown a conventional machine for cutting panels or stacked panels of wood and/or of any like material, comprising:
- the pressing member/cutting unit 1,
- the worktables 2 at which an operator stands, which are located upstream of unit 1,
- a control panel 3, which is accessible to an operator standing at the worktables 2,
- the worktable 4 located downstream of unit 1,
- the saddle 5 consisting of a bar arranged in parallel relation with the cutting unit 1, which is placed over the worktable 4, and is caused to slide on positive parallel guides 6, 6' secured to the base frame of the cutting apparatus, owing to the ends thereof being slidably fitted on the said guides.

The saddle 5 is driven by an electronically controlled motor 7, and this saddle is provided on its side turned toward the cutting unit 1, with grippers 8 for a panel or a stack of panels to be shifted as required.

Through the control panel 3, the motor 7 for driving the saddle 5 is connected to a programmable computer, whereby the said saddle is movable by precise shiftments along the longitudinal axis of the worktable 4, which is assumed to be the axis Y.

When the normal panel-cutting operation is to be carried out, the saddle 5 is caused to take hold of a panel or a stack of panels to be cut by its grippers 8, and to transfer by programmed travels the said panel or stack of panels from the worktable 2 to the worktable 4 or, more generally, from the worktable 4 to the worktable 2, the said saddle 5 being cyclically stopped in order to allow the cutting station 1 to be operated and caused to cut a large panel or a stack of large panels in the manner as required for obtaining smaller panels of any desired size.

According to the invention, the grippers 8 are of the withdrawable type, so that these grippers can be lifted up from the worktable 4, which is needed for preventing the grippers from interfering with the panel or stack of panels having been previously shifted thereby. In Figures 4 and 5 the known type grippers 8 are shown by solid lines in their uplifted position, in which they will not act upon a panel or a stack of panels, and by dash lines in their lowered down position, in which they will grip the panel or the stack of panels to be shifted.

Under the worktable 4 having a grate-like configuration, or which may be provided with openings, means 9 are arranged which perform a panel-holding and may be a panel-supporting function, and which, for example, comprise suckers being imparted an up and down movement, and being connected to a suction circuit. Means of this type are, for example, known in the field of the glass sheets-processing machines. When a panel or a stack of panels has to be shifted along the worktable 4, the suckers 9 are set in their down position, in which they are prevented from acting upon the panel or stack of panels.

The way in which the means 9 are arranged and distributed under the worktable 9, as shown in Figure 1, merely has an indicative character, so that a change in the arrangement and distribution of these means may be made according to any need or convenience.

The saddle 5 is fitted on that side which is opposite to its side carrying the grippers 8, with a longitudinal guide 10 on which a small auxiliary saddle 11 is caused to slide by precise shiftments, the said saddle 11 being operated by an electronically controlled motor 12 which through the control panel 3, is operatively connected to the computer of the combined machine according to the invention. It is to be understood that differently from the shown embodiment, the motor 12 may be mounted on the auxiliary saddle 11.

The auxiliary saddle 11 mounted onto the main saddle 5, can be thus moved by precise shiftments, even in the order of one hundreth, along the axis Y by the motor 7, and along the axis X by the motor 12.

Let us assume that as diagrammatically shown in Figure 4, at least one processing head (see hereinafter) is mounted onto the auxiliary saddle 11, which, for example, comprises a disk-type milling cutter 13, with its shaft being arranged horizontally, or a cylindrical milling cutter 14, with its shaft being arranged vertically, or one or more vertical drills 15 for any drilling work to be carried out, and that the said head is imparted not only its operative motion, but also an up and down movement along a vertical axis designated by reference Z. The processing head can be mounted on to the auxiliary saddle 11 with the interposition of a saddle-guiding unit 16, so as to be shiftable along the vertical axis Z, and the said unit can be driven by an electronically controlled precision motor (not shown).

When the combined machine according to the invention, is caused to work as cutting apparatus, the auxiliary saddle 11 is in rest position, for example, at one of the ends of its guide 10, or in the middle of the said guide, and the processing head 13, 14, or 15 which is mounted onto the said saddle, is in its uplifted inactive position, in which it is prevented from acting upon a panel.

When the combined machine, according to the invention, is to be used for a panel to be subjected to a machining operation that the station mounted onto the auxiliary saddle 11 is capable to carry out, the main saddle 5 is moved forward, close to the unit 1, with its grippers being set in their down position and in their opened condition, and the said saddle is caused to take hold of one side of the panel by its grippers. The gripped side of the panel is in finished condition, and is exactly positioned against the panel-abutting surfaces of the grippers, so that this panel side is accurately checked by the grippers themselves.

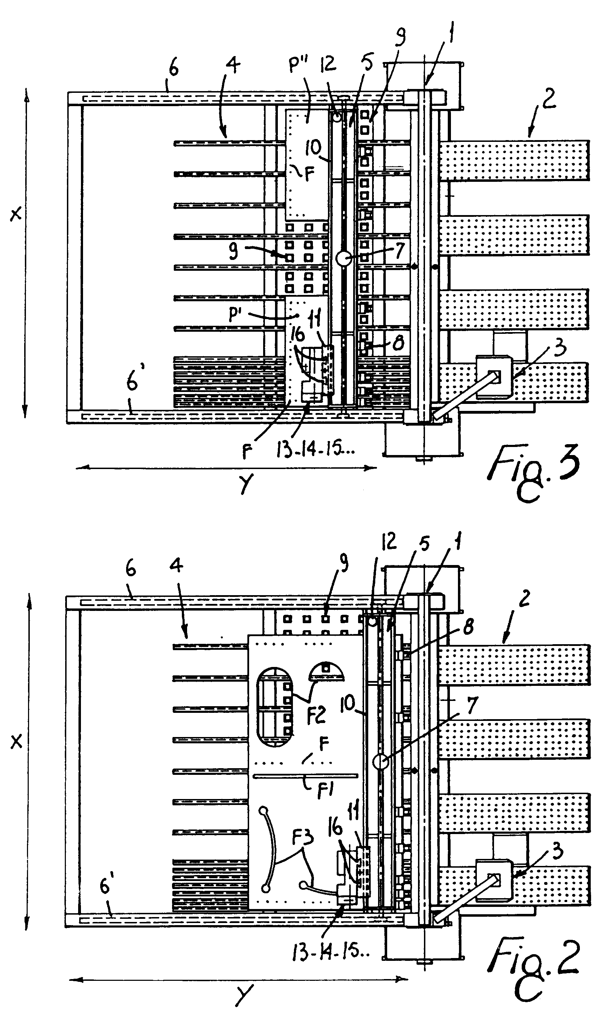

The saddle 5 with its grippers 8 in closed condition, is moved backward along the worktable 4, so that a panel P, as shown for example in Figure 2, or more panels P', P'', as in Figure 3, are positioned by the said saddle in that part of the worktable 4 which is provided with the aforesaid means 9. Such a positioning of the panel or panels is exactly effected, thanks to the fact that the saddle 5 can be moved by precise shiftments along the axis Y.

Once a panel or more panels P' P'' have been thus positioned, the means 9 are operated, and are caused to take hold of the panel or panels from their underside, and to firmly retain the same on the worktable 4.

At this stage, the grippers 8 are opened, and the saddle 5 is drawn away from the panel or panels to a sufficient degree for allowing the grippers to be lifted up, and to be thus neutralized.

The machine computer in which the position of saddle 5 relative to a panel P' or more panels P'', has been memorized before the said panel or panels having been released from the grippers 8 to be neutralized, now actuates in a programmed manner the motors 7 and 12, whereby the tool or tools of the processing head mounted onto the auxiliary saddle 11, can be exactly positioned over the panel or panels to be machined.

By the proper processing head tool being shifted in a precise manner along the axes X, Y, and Z, according to a predetermined program, the machine will be caused to automatically perform a drilling work F, as shown for example in Figures 2 and 3, or a milling or milling/drilling work F1, F2, or a milling/cutting work F3, as shown for example in Figure 2.

When the machining operations to be performed on a panel are of the type that does not affect the entire thickness of the same, the panel is allowed to remain in contact with the worktable 4, as shown in Figure 4. Whereas, when the machining operations are of the thorough cut type through the panel thickness, such as those designated by F3 in Figure 2, the panel is lifted from the worktable 4 by the panel-holding suckers 9, as diagrammatically shown in Figure 5. The suckers may be operated in a programmable manner, so as to prevent them from interfering with the tool in the panel-machining station, or the same may be each time automatically lowered down so as to avoid such an interference.

Suitable suction means, not shown, are provided for removing the chips resulting from the machining of a panel held by the means 9.

Once the machining of a panel has been completed, the panel may be returned by means of the unit 5-8 to the worktable 2 and thus to an operator, or the same may be otherwise discharged from the machine, the whole in a conceivable manner which therefore is not considered herein.

Among the advantages arising from various machining operations being combined in a single machine, it should not be disregarded the safety as afforded to an operator by being allowed to stand far away from the worktable 4 on which the variuos machining operations are performed, as well as by the said worktable being not accessible.

Of course, numerous changes and modifications may be brought to the disclosed machine, the more so in construction, and a different use of the same may be also contemplated.

More than one combined action or selective action processing head may be mounted onto the saddle 11. The processing heads may be, for example, mounted onto a revolving turret associated with the auxiliary saddle 11, and the said heads may be selectively moved down into their operative position.

Otherwise, the auxiliary saddle 11 may be provided with a universal coupling and caused to carry only one processing head, and more operative heads fitted with a like coupling, may be mounted onto a revolving turret, or onto a transfer means statically arranged on the perimeter of worktable 4, the auxiliary saddle 11 being operatively connected to the said transfer means so as be caused to automatically move the each time required processing head into its active position.

The processing heads may be even mounted on means for shifting the said heads along the axes X, Y, and Z; these means are not like the shown means, and the same may be moved with a precise shiftment by the saddle 5 of the cutting apparatus. A further saddle arranged parallel to the saddle 5 carrying the auxiliary saddle 11 which is fitted with, or is provided for the various processing heads, and which in rest position normally is at standstill out of the worktable 4, may be, for example, provided and moved over the worktable 4. This second saddle 5 may be provided with its own precision motion along the axis Y, or the same may be not motorized so as to be moved along the axis Y, and, in this case, this second saddle is set up for being moved in the direction of the said axis Y, by being interlocked with the main saddle 5.

## Claims

1. A combined machine that is not only capable to perform any cutting operation, but also any other machining operation such as milling, drilling, smoothing or the like, on panels or packs of panels of wood or any like material, comprising:
a) a cutting apparatus (1) for size-cutting panels, provided with a worktable (2, 4),
b) a pusher (5) for placing the panels correctly on the worktable (2, 4), which is driven by an electronically controlled motor (7),
c) means (9 to 16) which are arranged on the overall structure of the cutting apparatus (1), whereby one or more machining operations other than the cutting operation, can be performed on a panel placed onto the worktable (2, 4),
characterized by the following features:
d) an auxiliary saddle (11) which is exactly moved in the longitudinal direction (X) on a saddle constituting the pusher (5) of the cutting apparatus, which is moved in the transverse direction (Y) to feed the panels, and
e) one or more processing heads (13, 14, 15...) which are mounted to the auxiliary saddle (11) with the interposition of means (16) for a precise shiftment along the vertical axis (Z).

2. The combined machine according to Claim 1, characterized in that the pusher (5) is provided with withdrawable grippers (8).

3. The combined machine according to Claims 1 and 2, characterized by comprising::
f) suction means (9) arranged under the worktable (4) and operated upon control so as to be caused to hold and support the panel to be subjected to any machining operation other than the panel-cutting operation,
g) means for causing the pusher (5) of the cutting apparatus (1) to exactly transfer a to-be-machined panel over the said panel-holding and panel-supporting suction means (9) which are operated in timed relation for holding and may be lifting the panel from the worktable (4) of the cutting apparatus (1), whereupon the grippers (8) on the pusher (5) are opened, the pusher (5) is moved backward, and the grippers are set in their uplifted position in which they are prevented from acting upon the panel,
h) means for causing the processing head (13, 14, 15) that is mounted onto the said auxiliary saddle (11) and is exactly shifted along its own axes (X, Z) and along the axis (Y) of the pusher (5), to be operated so as to be caused to carry out the selected machining operation on a panel, once the panel or panels have been positioned over the said panel-holding and panel-supporting suction means (9),
i) means for causing the panel to be released from the panel-holding and panel-supporting suction means (9), and to be discharged from the worktable (2, 4) of the cutting apparatus (1) by the pusher (5) of said apparatus, once the various panel-machining operations have been carried out.

4. The combined machine according to Claims 1 to 3, characterized in that a plurality of processing stations are mounted onto the auxiliary saddle (11) by means of a revolving turret or a transfer means, and means being provided for directing downward and for actuating the each time selected station.

5. The combined machine according to Claims 1 to 4, characterized in that the auxiliary saddle (11) is fitted with a universal coupling, to which or from which there can be automatically assembled or disassembled the required processing head that has been each time selected among a plurality of processing heads magazine-mounted in a fixed station for an automatic change of the processing heads, which may be in form of a revolving turret or a transfer means, the pusher of the cutting apparatus being set up for the required automatic cooperation therewith.

## Patentansprüche

1. Kombinierte Maschine, die nicht nur einen beliebigen Schneidvorgang durchfuhren kann, sondern auch beliebige andere Bearbeitungsvorgänge, beispielsweise Fräsen, Bohren, Glätten oder dergleichen, und zwar an Platten oder Plattenstapeln aus Holz oder ähnlichem Material, mit
a) einer Schneidvorrichtung (1) zum Schneiden der Platten, die mit einem Arbeitstisch (2, 4) zusammenarbeitet,
b) einem Schieber (5) zum richtigen Anordnen der Platten am Arbeitstisch (2, 4), der von einem elektronisch gesteuerten Motor (7) angetrieben ist,
c) Mitteln (9-16), die an der Gesamtstruktur der Schneidvorrichtung (1) vorgesehen sind, wobei eine oder mehrere Bearbeitungen außer dem Schneider an einer Platte durchgeführt werden können, die sich auf dem Arbeitstisch (2, 4) befindet,
**dadurch gekennzeichnet,**
daß vorgesehen sind,
d) ein Hilfsschlitten (11), der in der Längsrichtung (X) eines Schlittens exakt bewegt wird, der den Schieber (5) der Schneidvorrichtung ausbildet, und der in der Querrichtung (Y) bewegt wird, um die Platten zu bearbeiten, und
e) ein oder mehrere Bearbeitungsköpfe (13, 14, 15 ...), die am Hilfsschlitten (11) befestigt sind, und zwar unter Zwischenfügung von Mitteln (16) für ein genaues Verschieben längs der vertikalen Achse (Z).

2. Maschine nach Anspruch 1,
**dadurch gekennzeichnet,**
daß der Schieber (5) mit zurückziehbaren Greifern (8) versehen ist.

3. Maschine nach Anspruch 1 und 2,
**dadurch gekennzeichnet,**
daß vorgesehen sind
f) Saugmittel (9), die unter dem Arbeitstisch (4) vorgesehen sind, und die gesteuert betätigt werden, so daß sie die zu bearbeitende Platte halten und stützen, und zwar bei Bearbeitungsvorgängen, die nicht im Schneiden bestehen,
g) Mittel, mit denen bewirkt wird, daß der Schieber (5) der Schneidvorrichtung (1) exakt zu einer zu bearbeitenden Platte über den Saugmitteln (9) zum Halten und Stützen der Platten bewegt wird, die zeitlich abgestimmt zum Halten betätigt werden, und die die Platte vom Arbeitstisch (4) der Schneidvorrichtung (1) anheben können, worauf die Greifer (8) am Schieber (5) geöffnet werden und der Schieber (5) nach hinten bewegt wird, und wobei die Greifer in ihre angehobene Position bewegt werden, in der sie daran gehindert sind, an die Platte anzustoßen,
h) Mittel, mit denen bewirkt wird, daß der Bearbeitungskopf (13, 14, 15), der am Hilfsschlitten (11) befestigt ist, und der exakt längs seiner eigenen Achsen (X, Z) verschoben wird und auch längs der Achse (Y) des Schiebers (5), mit denen also der Bearbeitungskopf so betätigt wird, daß er die ausgesuchte Bearbeitung an einer Platte durchführt, nachdem die Platte oder die Platten über den Saugmitteln (9) zum Halten und Stützen der Platten positioniert worden sind,
i) Mittel, mit denen bewirkt wird, daS die Platte von den Saugmitteln (9) zum Stützen und Halten der Platten gelost wird, und mit denen die Platte vom Arbeitstisch (2, 4) der Schneidvorrichtung mit Hilfe des Schiebers (5) der Vorrichtung abgegeben wird, nachdem die verschiedenen Bearbeitungen an der Platte durchgeführt worden sind.

4. Maschine nach den Patentansprüchen 1 - 3,
**dadurch gekennzeichnet,**
daß eine Vielzahl von Bearbeitungsstationen am Hilfsschlitten (11) befestigt sind, und zwar mit Hilfe eines Drehkopfes oder eines Transfermittels, und daß Mittel vorgesehen sind, um die jeweils ausgewählte Station nach unten zu richten und zu betätigen.

5. Maschine nach den Patentansprüchen 1 - 4,
**dadurch gekennzeichnet,**
daß der Hilfsschlitten (11) mit einer Universalkupplung ausgerüstet ist, so daß der jeweils gewünschte Bearbeitungskopf automatisch aktiviert oder entaktiviert werden kann, der jeweils aus einer Vielzahl von Bearbeitungsköpfen ausgewählt worden ist, die in einem Magazin in einer festen Station vorgesehen sind zum automatischen Wechseln der Bearbeitungsköpfe, die in Form eines Drehkopfes oder eines Transfermittels vorliegen können, wobei der Schieber der Schneidvorrichtung so ausgebildet ist, daß er automatisch damit zusammenarbeiten kann.

## Revendications

1. Machine combinée non seulement susceptible d'effectuer toute opération de coupe, mais aussi n'importe quelle opération d'usinage telle que fraisage, perçage, ponçage ou similaires, sur des panneaux ou des paquets de panneaux de bois ou tout matériau similaire, comprenant :
a) un appareil (1) de coupe à dimension de panneaux, muni d'une table de travail (2, 4),
b) un organe de poussage (5) pour le placement correct des panneaux sur la table de travail (2, 4), entraîné par un moteur commandé électroniquement (7),
c) des moyens (9 à 16) disposés sur toute l'étendue de la structure de l'appareil de coupe (1), au moyen desquels une ou plusieurs opérations d'usinage, autres que celle de coupe, peuvent être effectuées sur un panneau placé sur la table de travail (2, 4),
caractérisé par :
d) un chariot porte-outil auxiliaire (11) déplacé avec précision dans une direction longitudinale (X) sur un chariot formant l'organe de poussage (5) de l'appareil de coupe, ledit chariot étant déplacé dans la direction transversale (Y) pour l'approvisionnement en panneaux, et
e) une ou plusieurs têtes d'usinage (13, 14, 15 ...) montées sur le chariot porte-outil auxiliaire (11) avec interposition de moyens (16) pour un déplacement précis le long de l'axe vertical (Z).

2. Machine combinée selon la revendication 1, caractérisée en ce que l'organe de poussage (5) est muni de moyens d'agrippement (8) amovibles.

3. Machine combinée selon la revendication 1 ou 2, caractérisée en ce qu'elle comprend :
f) des moyens de succion (9) disposés sous la table de travail (4) et commandés en sorte de saisir et porter le panneau devant être soumis à une opération d'usinage autre que celle de coupe,
g) des moyens contraignant l'organe de poussage (5) de l'appareil de coupe (1) à transférer avec précision un panneau à usiner sur lesdits moyens de succion (9) chargés de la saisie et du support des panneaux, lesquels sont actionnés en synchronisme pour saisir et éventuellement soulever le panneau de la table de travail (4) de l'appareil de coupe (1), après quoi les moyens d'agrippement (8) de l'organe de poussage (5) sont écartés, l'organe de poussage (5) est déplacé en arrière, et les moyens de saisie sont mis dans leur position haute dans laquelle ils ne peuvent agir sur le panneau,
h) des moyens pour contraindre la tête d'usinage (13, 14, 15), montée sur ledit chariot porte-outil auxiliaire (11) et déplacée avec précision le long de ses propres axes (X, Z) et le long de l'axe (Y) de l'organe de poussage (5), à être actionnée en sorte d'effectuer l'opération d'usinage du panneau choisie, une fois que le panneau ou les panneaux sont positionnés sur lesdits moyens de succion (9) chargés de la saisie et du support,
i) des moyens pour contraindre le panneau à être relâché par les moyens de succion (9) chargés de la saisie et du support du panneau, et déchargé de la table de travail (2, 4) de l'appareil de coupe (1) par l'organe de poussage (5) dudit appareil, dès que les diverses opérations d'usinage du panneau sont effectuées.

4. Machine combinée selon les revendications 1 à 3, caractérisée en ce qu'une pluralité de stations d'usinage sont montées sur le chariot porte-outil auxiliaire (11) au moyen d'une tourelle revolver ou d'un moyen de transfert, et des moyens étant prévus pour diriger vers le bas et actionner à chaque fois la station sélectionnée.

5. Machine combinée selon les revendications 1 à 4, caractérisée en ce que le chariot porte-outil auxiliaire (11) est pourvu d'un dispositif d'accouplement universel, grâce auquel peut être automatiquement montée ou démontée la tête d'usinage choisie qui est à chaque fois sélectionnée parmi une pluralité de têtes d'usinage d'un chargeur monté à poste fixe pour un changement automatique des têtes d'usinage, lequel chargeur peut être formé d'une tourelle revolver ou d'un moyen de transfert, l'organe de poussage de l'appareil de coupe étant agencé pour la coopération automatique requise avec celui-ci.
